# EUROPÄISCHE PATENTSCHRIFT

(11) **EP 1 297 938 B1**
(45) Veröffentlichungstag und Bekanntmachung des Hinweises auf die Patenterteilung: **27.07.2005**
(21) Anmeldenummer: 02020714.8
(22) Anmeldetag: 14.09.2002
(51) Int. Cl.: B29C 33/62, B29D 23/18

(54) **Verwendung von Polyestern als Gleit- und Trennmittel für Gummiformkörper**
Use of polyesters as lubricant and release agent for rubber moldings
Utilisation de polyesters comme agent de démoulage et de lubrification pour des objets moulés en caoutchouc

(30) Priorität: 28.09.2001 DE 10148002
(43) Veröffentlichungstag der Anmeldung: 02.04.2003
(73) Patentinhaber: Goldschmidt GmbH, 45127 Essen (DE)
(72) Erfinder: Begoihn, Uwe, 45359 Essen (DE); Dörrbecker, Fred, 45147 Essen (DE); Feldmann-Krane, Georg, Dr., 45472 Mülheim (DE); Lammerting, Helmut, 58456 Herbede (DE)

(56) Entgegenhaltungen:
- EP-A- 0 000 424
- EP-A- 0 537 891
- EP-A- 0 738 775
- DE-A- 4 202 065
- DE-A- 19 606 327
- US-A- 2 917 410
- US-A- 2 962 524
- US-A- 3 169 945
- US-A- 5 955 402
- US-A- 5 993 529
- DATABASE WPI Section Ch, Week 199704 Derwent Publications Ltd., London, GB; Class A23, AN 1997-038040 XP002221025 & JP 08 295727 A (DAINIPPON INK & CHEM INC), 12. November 1996 (1996-11-12)
- HUH K M ET AL: "Synthesis and characterization of poly(ethylene glycol)/poly(l-lactic acid) alternating multiblock copolymers" POLYMER, ELSEVIER SCIENCE PUBLISHERS B.V, GB, Bd. 40, Nr. 22, Oktober 1999 (1999-10), Seiten 6147-6155, XP004172484 ISSN: 0032-3861

## Beschreibung

Die Erfindung betrifft die Verwendung von Polyestern als Gleit- und Trennmittel für Gummiformkörper.

Bei der Herstellung von Gummiformkörpern benötigt man Trennmittel, um die geformten Gummiwaren aus den Formen entnehmen zu können und ein Ankleben der Formkörper an den Formwänden zu vermeiden. Häufig wird an ein derartiges Trennmittel aber auch die Forderung gestellt, dass es die Reibung des Gummiformkörpers an der Wand eines formgebenden Elements verringern soll.

Besonders schwierige Gleit- und Trennprobleme treten bei der Herstellung von sogenannten Krümmerschläuchen, wie sie beispielsweise im Automobilbau und bei Wasch- und Reinigungsmaschinen benötigt werden, auf. Hierbei wird ein vulkanisierbarer Rohling auf einen mitunter sehr kompliziert geformten Dorn aufgezogen. Nach der Vulkanisation muss der heiße Gummiformkörper von dem Dorn abgezogen werden, wozu erheblicher Kraftaufwand notwendig ist. Die benötigte Kraft wird einerseits durch die Formgebung des Dorns und andererseits durch die Haftung des Formkörpers auf dem Dorn bestimmt.

Zur Vermeidung der Haftung und Verbesserung der Gleitfähigkeit hat man derartige zu vulkanisierende Rohlinge, die auf einen gekrümmten Dorn gezogen werden sollen, mit Dispersionen von Silikonölen, Glycerin und Wachsen behandelt. Hierdurch wird zwar die Haftung und Reibung vermindert, jedoch geschieht dies nicht in einem technisch befriedigenden Ausmaß.

Der EP-A-0 537 891 können Trennmittel für die Herstellung von Krümmerschläuchen entnommen werden, die aus Copolymerisaten von Ethylenoxid und Propylenoxid bestehen. Diese Trennmittel zeigen ihre guten Eigenschaften bei ihrer Anwendung bei unpolaren Kautschuktypen, wie z.B. EPDM und dienischem Kautschuk. Sie zeigen aber bei der Verarbeitung von polaren Kautschuktypen, wie z.B. Epichlorhydrinkautschuk und Copolymerisaten, die aus Acrylaten und Ethylen bestehen, nur wenig ausreichende Wirkung. Diese polaren Kautschuktypen sind extrem klebrig und lassen sich deshalb mit diesen Mitteln des Standes der Technik nur schwer entformen.

Ein Trenn- und Gleitmittel wird z.B. in der europäischen Patentanmeldung EP-A-0 738 775 beschrieben, wo Polyester aus einem Polyethylenglykol oder einem Gemisch von Polyalkylenglykolen und einer linearen Dicarbonsäure oder einem Gemisch linearer Dicarbonsäuren eingesetzt werden.

Ein weiteres Trenn- und Gleitmittel wird z.B. in der deutschen Patentanmeldung DE-A-196 06 327 beschrieben, welches Polyester umfasst, die durch Umsetzung eines oder mehrerer Polyglykole der Formel

H-[O-CH₂-CH₂]ₓ-O-CₙH₂ₙ-O-[CH₂-CH₂-O]_{y}-H

wobei
- n =: 2 bis 6,
die Durchschnittswerte für
x und y jeweils 0 bis 22 betragen
und der Durchschnittswert für die Summe
x und y 2 bis 44 beträgt,
mit einem Gemisch aus
a) einer oder mehreren Dicarbonsäuren und
b) einer Fettsäurekomponente, ausgewählt aus (i) einer oder mehreren Fettsäuren und/oder (ii) Glycerinestern derselben erhalten werden.

Die in diesen Literaturstellen offenbarten flüssigen Verbindungen weisen starke Viskositätsschwankungen auf und zeigen somit eine schlechte Reproduzierbarkeit. Sie weisen außerdem keine ausreichende biologische Abbaubarkeit auf. Bei diesen Verbindungen ist eine für die Praxis befriedigende Gleitwirkung für die Kautschukrohlinge, insbesondere Rohlinge aus polaren Kautschuktypen nicht gegeben.

In der JP-A-8 295 727 und durch Kang Moo Huh u.a., Polymer, Band 40 (1999), Nr.22, Seiten 6147-6155 werden zwar Wege zur Verbesserung der biologischen Abbaubarkeit von Polyestern durch Umsetzung von Ethylenglykol, Propylenglykol, Dicarbonsäure, Glykolsäure und/oder Milchsäure beschrieben, jedoch enthalten diese Literaturstellen keinerlei Aussage zur Verbesserung der Gleitwirkung.

Der vorliegenden Erfindung liegt die Aufgabe zugrunde, ein Trennmittel insbesondere für die Verarbeitung von polaren Kautschuktypen zur Verfügung zu stellen, welches die o.g. Nachteile vermeidet.

Überraschenderweise wurde ein Trenn- und Gleitmittel gefunden, das einen bei Raumtemperatur flüssigen Polyester umfasst, der durch Kondensation von geradkettigen Dicarbonsäuren mit Polyalkylenglykolen und Glykolsäure und/oder Milchsäure nach an sich bekannten Bedingungen erhalten wird.

Gegenstand der Erfindung ist daher die Verwendung von Polyestern aus mindestens einem Polyalkylenglykol und mindestens einer Dicarbonsäure als Gleit- und Trennmittel für Gummi- und Kautschukformkörper, insbesondere Krümmerschläuche, wobei die Polyester bei Raumtemperatur flüssige Kondensationsprodukte aus
a) mindestens einem Polyalkylenglykol der allgemeinen Formel (I)

   HO- (CH₂-CH₂-O)ₐ-(CH₂-CH(CH₃) -O)_{b} H (I)

   mit
   a = 4 bis 16,
   b = 0 bis 4, und
b) mindestens einer Dicarbonsäure der allgemeinen Formel (II)

   HOOC-(CH₂)_{c}-COOH (II)

   mit
   c = 2 bis 8 und
c) Glykolsäure und/oder Milchsäure
sind.

Weitere Gegenstände der Erfindung sind durch die Ansprüche gekennzeichnet.

Die erfindungsgemäß allein oder als Mischung mitverwendeten Polyalkylenglykole sind Verbindungen der allgemeinen Formel (I)

HO- (CH₂-CH₂-O)ₐ-(CH₂-CH(CH₃)-O)_{b} H (I)

Sie werden hergestellt nach an sich bekannten Verfahren, durch Anlagerung von 2 bis 8, vorzugsweise 4 bis 6 Mol Ethylenoxid pro Hydroxylgruppe, d.h.
a = 4 bis 16, vorzugsweise 8 bis 12
und gegebenenfalls 0 bis 4 Mol Propylenoxid. Dabei werden flüssige Produkte erhalten, die wasserlöslich sind.

Die erfindungsgemäß mitverwendeten Dicarbonsäuren sind Verbindungen der allgemeinen Formel (II)

HOOC- (CH₂)_{c}-COOH (II)

mit
c = 2 bis 8, vorzugsweise 4 bis 6.

Dies ist die homologe Reihe der Dicarbonsäuren mit Butandisäure, Pentandisäure, Hexandisäure, Heptandisäure, Octandisäure, Nonandisäure, Decandisäure, wobei, Hexandisäure, Heptandisäure und Octandisäure bevorzugt sind. Diese Säuren können allein oder als Mischung eingesetzt werden.

Glykolsäure und/oder Milchsäure werden in den handelsüblichen Formen, d.h. wässrigen Lösungen der gegebenen Konzentrationen mitverwendet.

Zur Modifizierung der Eigenschaften der Reaktionsprodukte können auch längerkettige Hydroxycarbonsäuren und/oder deren Lactone verwendet oder mitverwendet werden, wie beispielsweise Hydroxybuttersäure, Butyrolacton, Hydroxycapronsäure, Caprolacton. Ihre Verwendung beziehungsweise Mitverwendung beinflusst jedoch die biologische Abbaubarkeit der Trennmittel negativ und ist daher erfindungsgemäß nicht bevorzugt.

Die Polykondensation erfolgt in üblicher Weise durch Zusammengabe der Komponenten bei Raumtemperatur und Aufheizung, vorzugsweise unter Inertgas, auf Reaktionstemperaturen von ca. 150 bis ca. 200 °C und kontinuierlicher Entfernung des Reaktionswassers oder des Alkohols, falls Ester der Dicarbonsäuren eingesetzt wurden, wobei zur Vervollständigung der Reaktion auch unter vermindertem Druck gearbeitet werden kann.

Das Verhältnis der Komponenten a) : b) : c) kann innerhalb eines Bereiches variiert werden, in dem bei Raumtemperatur fließfähige und vorzugsweise flüssige Reaktionsprodukte erhalten werden, welche Viskositäten von annähernd 1.200 bis 8.500 mPas aufweisen.

Dieser Bereich liegt im Verhältnis a) : b) : c) = 1 : (0,85 bis 0,5) : (0,1 bis 0,45), wobei die Verhältnisse 1 : (0,75 bis 0,6) : (0,20 bis 0,35) und insbesondere 1 : (0,7 bis 0,65) : (0,25 bis 0,30) bevorzugt sind.

Diese bevorzugten Bereiche entsprechen Säurezahlen der Reaktionsprodukte von etwa 3 bis 6.

Zur Optimierung der anwendungstechnischen Eigenschaften können noch bis zu 10 % herkömmliche Additive (z.B. Korrosionsschutzmittel, Stabilisatoren, Antioxydantien und Netzmittel) beigemischt werden.

Als Netzmittel zur Verbesserung der Auswaschbarkeit sind die bekannten anionaktiven Tenside verwendbar. Besonders geeignet ist das Natriumlaurylethersulfat. Andere Netzmittel sind zum Beispiel die Dodecylbenzolsulfonate.

Als Korrosionsschutzmittel kann man ebenfalls die aus dem Stand der Technik bekannten Produkte verwenden. Geeignet ist zum Beispiel das Triethanolammoniumsalz einer Alkylarylamidocarbonsäure.

In den folgenden Beispielen wird zunächst die Herstellung der erfindungsgemäßen Gleit- und Trennmittel gezeigt und ihre anwendungstechnischen Eigenschaften näher erläutert.

### Beispiel 1:

### Herstellung der erfindungsgemäßen Gleit- und Trennmittel

### Beispiel 1 a) :

In einer Laborrührapparatur mit Stickstoffdurchleitung und Destillationsbrücke werden 647,7 g eines Polyethylenglykols mit einer mittleren molaren Masse von 400 mit 154,7 g Adipinsäure und 97,7 g einer 90 %igen Milchsäure vorgelegt (Dies entspricht einem Molverhältnis von 1 : 0,65 : 0,30, PEG : Adipinsäure : Milchsäure). Nach Zugabe von p-Toluolsulfonsäure zur Katalyse wird das Gemisch unter vermindertem Druck (ca. 30 mPas, eingestellt mit Stickstoff) langsam auf 150 °C erhitzt, das Reaktionsgemisch 6 bis 7 Stunden bei dieser Temperatur gehalten und das bei der Reaktion entstehende Wasser kontinuierlich abgezogen. Die Reaktion wird bis zum Erreichen einer konstanten Säurezahl weitergeführt. Die Säurezahl liegt am Ende der Reaktion bei 2,9, was einem Umsetzungsgrad von 98,5 % entspricht. Das Produkt wird unter Stickstoff und vermindertem Druck abgekühlt. Die Viskosität (gemessen bei 25 °C, Brookfield Viskosimeter) liegt bei 1.660 mPas.

### Beispiel 1 b) :

In einer Laborrührapparatur mit Stickstoffdurchleitung und Destillationsbrücke werden 647,7 g eines Polyethylenglykols mit einer mittleren molaren Masse von 400 mit 154,7 g Adipinsäure und 74,2 g Glycolsäure vorgelegt.(Dies entspricht einem Molverhältnis von 1 : 0,65 : 0,30, PEG : Adipinsäure : Glycolsäure). Nach Zugabe von p-Toluolsulfonsäure zur Katalyse wird das Gemisch unter vermindertem Druck (ca. 30 mPas, eingestellt mit Stickstoff) langsam auf 150 °C erhitzt. Das Reaktionsgemisch wird 6 bis 7 Stunden bei dieser Temperatur gehalten. Das bei der Reaktion entstehende Wasser wird kontinuierlich abgezogen. Die Reaktion wird bis zum Erreichen einer konstanten Säurezahl weitergeführt. Die Säurezahl liegt am Ende der Reaktion bei 3,1, was einem Umsetzungsgrad von 98,9 % entspricht. Das Produkt wird unter Stickstoff und vermindertem Druck abgekühlt. Die Viskosität (gemessen bei 25 °C, Brookfield Viskosimeter) liegt bei 1.770 mPas.

### Beispiel 1 c) :

In einer Laborrührapparatur mit Stickstoffdurchleitung und Destillationsbrücke werden 647,7 g eines Polyethylenglykols mit einer mittleren molaren Masse von 400 mit 178,5 g Adipinsäure und 65,1 g einer 90 %igen Milchsäure vorgelegt. (Dies entspricht einem Molverhältnis von 1 : 0,75 : 0,20, PEG : Adipinsäure : Milchsäure). Nach Zugabe von p-Toluolsulfonsäure zur Katalyse wird das Gemisch unter vermindertem Druck (ca 30 mPas, eingestellt mit Stickstoff) langsam auf 150 °C erhitzt. Das Reaktionsgemisch wird 6 bis 7 Stunden bei dieser Temperatur gehalten. Das bei der Reaktion entstehende Wasser wird kontinuierlich abgezogen. Die Reaktion wird bis zum Erreichen einer konstanten Säurezahl weitergeführt. Die Säurezahl liegt am Ende der Reaktion bei 2,7, was einem Umsetzungsgrad von 98,3 % entspricht. Das Produkt wird unter Stickstoff und vermindertem Druck abgekühlt. Die Viskosität (gemessen bei 25 °C Brookfield Viskosimeter) liegt bei 5.500 mPas.

### Beispiel 1 d) :

In einer Laborrührapparatur mit Stickstoffdurchleitung und Destillationsbrücke werden 647,7 g eines Polyethylenglykols mit einer mittleren molaren Masse von 400 mit 154,7 g Adipinsäure, 59,3 g Glutarsäure und 48,9 g einer 90 %igen Milchsäure vorgelegt. (Dies entspricht einem Molverhältnis von 1 : 0,65 : 0,15 : 0,15, PEG : Adipinsäure : Glutarsäure : Milchsäure).

Nach Zugabe von p-Toluolsulfonsäure zur Katalyse wird das Gemisch unter vermindertem Druck (ca. 30 mPas, eingestellt mit Stickstoff) langsam auf 150 °C erhitzt.

Das Reaktionsgemisch wird 6 bis 7 Stunden bei dieser Temperatur gehalten. Das bei der Reaktion entstehende Wasser wird kontinuierlich abgezogen. Die Reaktion wird bis zum Erreichen einer konstanten Säurezahl weitergeführt. Die Säurezahl liegt am Ende der Reaktion bei 3,2, was einem Umsetzungsgrad von 98,7 % entspricht. Das Produkt wird unter Stickstoff und vermindertem Druck abgekühlt. Die Viskosität (gemessen bei 25 °C, Brookfield Viskosimeter) liegt bei 2.500 mPas.

### Beispiel 1 e) :

In einer Laborrührapparatur mit Stickstoffdurchleitung und Destillationsbrücke werden 955,1 g eines Polyalkylenglykols mit einem Propylenoxidanteil von 20 Gew.-% und einer mittleren molaren Masse von 600 mit 154,7 g Adipinsäure und 97,5 g einer 90 %igen Milchsäure vorgelegt (Dies entspricht einem Molverhältnis von 1 : 0,65 : 0,30, PEG : Adipinsäure : Milchsäure). Nach Zugabe von p-Toluolsulfonsäure zur Katalyse wird das Gemisch unter vermindertem Druck (ca. 30 mPas, eingestellt mit Stickstoff) langsam auf 150 °C erhitzt, das Reaktionsgemisch 6 bis 7 Stunden bei dieser Temperatur gehalten und das bei der Reaktion entstehende Wasser kontinuierlich abgezogen. Die Reaktion wird bis zum Erreichen einer konstanten Säurezahl weitergeführt. Die Säurezahl liegt am Ende der Reaktion bei 5, was einem Umsetzungsgrad von 96,6 % entspricht. Das Produkt wird unter Stickstoff und vermindertem Druck abgekühlt. Die Viskosität (gemessen bei 25 °C, Brookfield Viskosimeter) liegt bei 1.800 mPas.

Herstellung eines nicht erfindungsgemäßen Gleit- und Trennmittels:

### Beispiel 1 f) :

In einer Laborrührapparatur mit Stickstoffdurchleitung und Destillationsbrücke werden 647,7 g eines Polyethylenglykols mit einer mittleren molaren Masse von 400 mit 154,7 g Adipinsäure und 72,3 g Propionsäure vorgelegt. (Dies entspricht einem Molverhältnis von 1: 0,65 : 0,3, PEG : Adipinsäure : Propionsäure). Nach Zugabe von p-Toluolsulfonsäure zur Katalyse wird das Gemisch unter vermindertem Druck (ca. 30 mPas, eingestellt mit Stickstoff) langsam auf 150 °C erhitzt. Das Reaktionsgemisch wird 6 bis 7 Stunden bei dieser Temperatur gehalten. Das bei der Reaktion entstehende Wasser wird kontinuierlich abgezogen. Die Reaktion wird bis zum Erreichen einer konstanten Säurezahl weitergeführt. Die Säurezahl liegt am Ende der Reaktion bei 2,6, was einem Umsetzungsgrad von 98,9% entspricht. Das Produkt wird unter Stickstoff und vermindertem Druck abgekühlt. Die Viskosität (gemessen bei 25 °C, Brookfield Viskosimeter) liegt bei 870 mPas.

### Beispiel 2:

Zur Herstellung von Zubereitungen mit den erfindungsgemäßen Gleit- und Trennmitteln, deren Anwendung sowie Prüfung der Gleit- und Trenneigenschaften.

### Beispiel 2 a) :

97 Teile der erfindungsgemäßen Substanz gemäß Beispiel 1 a)
2 Teile Korrosionsschutzmittel
1 Teil Antioxidans

Diese Zubereitung wird durch einfaches scherkraftarmes Mischen in einem Rührwerksbehälter erstellt. Alle Substanzen sind ineinander löslich. Die erstellte Zubereitung weist eine Viskosität von 1.620 mPas auf. Die vorliegende Zubereitung wird in einer Krümmerschlauchfertigung anwendungstechnisch überprüft. Dazu wird ein nicht vulkanisiertes Schlauchstück aus Acrylatkautschuk von 750 mm Länge und 238 mm Innendurchmesser in eine Trennmittelzubereitung eingetaucht, wobei das Trennmittel in das Innere des Schlauches läuft und dort die Wandung benetzt. Für das Schlauchstück werden 6 g Trennmittel benötigt. Unmittelbar danach wird das Schlauchstück auf einen gekrümmten Dorn manuell aufgeschoben. Dabei werden sehr geringe Aufschiebkräfte beobachtet. Daraufhin erfolgt die Vulkanisation mit einem bei 180 °C mit Dampf beheizten Vulkanisationskessel. Die Vulkanisationszeit beträgt 20 Minuten. Danach wird das vulkanisierte Schlauchstück von dem Dorn abgezogen. Der ausvulkanisierte Formkörper lässt sich ohne größere Kraftanstrengung von dem Dorn entfernen. Dieser Zyklus wurde parallel auf 30 bis 40 Dornen ca. 60 mal durchgeführt. Die Dorne zeigten danach noch ein einwandfreies Aussehen.

### Beispiel 2 b) :

97 Teile der erfindungsgemäßen Substanz gemäß Beispiel 1 b)
2 Teile Korrorionsschutzmittel
1 Teil Antioxidans

Diese Zubereitung wird ebenfalls durch scherkraftarmes Mischen in einem Rührwerksbehälter erstellt. Die erzielte Viskosität beträgt 1.710 mPas Die Zubereitung wird in einer Krümmerschlauchfertigung in analoger Weise gemäß Beispiel 2 a) anwendungstechnisch überprüft. Auch in diesem Falle wurden sehr geringe Aufschiebkäfte und Abziehkräfte beobachtet.

### Beispiel 2 c) :

97 Teile der erfindungsgemäßen Substanz gemäß Beispiel 1 c)
2 Teile Korrorionsschutzmittel
1 Teil Antioxidans

Diese Substanzen sind ineinander löslich und können durch scherkraftarmes Mischen in einem Rührwerksbehälter vermischt werden. Das dabei entstehende Gemisch hat eine Viskosität von 5.380 mPas Diese Zubereitung wird in analoger Weise gemäß Beispiel 2 a) angewendet. Auch in diesem Fall wurden sehr geringe Aufschiebkräfte und jeweils nach der Vulkanisation ein einwandfreies Abtrennen des Formkörpers vom Dorn festgestellt.

### Beispiel 2 d) :

97 Teile der erfindungsgemäßen Substanz gemäß Beispiel 1 d)
2 Teile Korrosionsschutzmittel
1 Teil Antioxidans

Diese Substanzen sind ineinander löslich und können durch scherkraftarmes Mischen in einem Rührwerksbehälter vermischt werden. Das dabei entstehende Gemisch hat eine Viskosität von 2.430 mPas Diese Zubereitung wird in analoger Weise gemäß Beispiel 2 a) angewendet. Auch in diesem Falle werden sehr geringe Aufschiebkräfte und jeweils nach der Vulkanisation ein einwandfreies Abtrennen des Formkörpers vom Dorn festgestellt.

### Beispiel 2 e) :

Es wird eine Zubereitung gemäß Beispiel 2 a) verwendet. Diese wird in analoger Weise gemäß Beispiel 2 a) in einer Krümmerschlauchfertigung überprüft. In diesem Fall wird jedoch ein Schlauchstück aus EPDM-Kautschuk mit vergleichbaren Abmessungen vulkanisiert. Auch hier zeigen sich sehr geringe Aufschiebkräfte. Nach der Vulkanisation ist ein einwandfreies Abtrennen des Formkörpers vom Dorn festgestellt worden.

### Beispiel 2 f) :

97 Teile der erfindungsgemäßen Substanz gemäß Beispiel 1 e)
2 Teile Korrosionsschutzmittel
1 Teil Antioxidans

Diese Substanzen sind ineinander löslich und können durch scherkraftarmes Mischen in einem Rührwerksbehälter vermischt werden. Das dabei entstehende Gemisch hat eine Viskosität von 1.800 mPas Diese Zubereitung wird in analoger Weise gemäß Beispiel 2 a) angewendet. Auch in diesem Falle werden sehr geringe Aufschiebkräfte und jeweils nach der Vulkanisation ein einwandfreies Abtrennen des Formkörpers vom Dorn festgestellt.

### Beispiel 2 g); nicht erfindungsgemäß:

97 Teile der Substanz gemäß Beispiel 1 f)
2 Teile Korrosionsschutzmittel
1 Teil Antioxidans

Diese Substanzen sind ineinander löslich und können durch scherkraftarmes Mischen in einem Rührwerksbehälter vermischt werden. Das dabei entstehende Gemisch hat eine Viskosität von 830 mPas.

Diese Zubereitung wird in analoger Weise gemäß Beispiel 2 a) angewendet. Es zeigt sich, dass das Aufschieben der Rohlinge und das Abziehen der ausvulkanisierten Schläuche bei sonst analoger Verarbeitungsweise und Werkzeugen gleicher Geometrie mit einer größeren Kraftanstrengung verbunden ist, so dass es zur Verformung der Schlauchstücke kommt.

### Beispiel 2 h); nicht erfindungsgemäß:

Hier wird ein Trennmittel des Standes der Technik verwendet. Es handelt sich dabei um ein Veresterungsprodukt von Polyethylenglykol mit einem Molekuargewicht von 400 und Adipinsäure. Es zeigte eine Viskosität von ca. 12.000 mPas Dieses Produkt wurde in analoger Weise gemäß Beispiel 2 a) in einer Krümmerschlauchfertigung überprüft. Es zeigt sich, dass das Aufschieben der Rohlinge und das Abziehen der ausvulkanisierten Schläuche bei sonst analoger Verarbeitungsweise und Werkzeugen gleicher Geometrie mit einer größeren Kraftanstrengung verbunden ist, so dass es zur Verformung der Schlauchstücke kommt.

### Beispiel 3:

### Auswaschen der Trenn- und Gleitmittel aus den vulkanisierten Schläuchen

Die im Beispiel 2 a), b), c), d), e) f) entformten Schlauchstücke werden zur Entfernung der Trennmittelrückstände in einer Industriewaschmaschine ca. 15 Minuten lang bei 40 °C behandelt. Es zeigte sich in allen Fällen eine gute Löslichkeit vorhandener Trennmittelrückstände und somit ein gutes Auswaschverhalten der erfindungsgemäß verwendeten Trennmittel.

Die Auswertung der hier beschriebenen Versuche zeigt, dass die erfindungsgemäßen Trenn- und Gleitmittel einen reibungslosen Fertigungsablauf garantieren. Somit wird die Wirtschaftlichkeit verbessert und die Ausschussrate reduziert. Dies gilt insbesondere für die Herstellung temperaturbeständiger hochwertiger Formkörper aus polaren Kautschuktypen. Die erfindungsgemäß hergestellten Trennmittel sind geruchsfrei und hautfreundlich und verbessern somit die Arbeitsplatzhygiene erheblich. Die erfindungsgemäß beschriebenen Trennmittel sind sehr gut biologisch abbaubar, so dass die damit verunreinigten Abwässer in kommunale Kläranlagen eingeleitet werden können.

## Patentansprüche

1. Verwendung von Polyestern aus mindestens einem Polyalkylenglykol und mindestens einer Dicarbonsäure als Gleit- und Trennmittel für Gummi- und Kautschukformkörper, insbesondere Krümmerschläuche, **dadurch gekennzeichnet, dass** die Polyester bei Raumtemperatur flüssige Kondensationsprodukte aus
a) mindestens einem Polyalkylenglykol der allgemeinen Formel (I)
HO- (CH₂-CH₂-O)ₐ-(CH₂-CH(CH₃)-O)_{b} H (I)
mit
a = 4 bis 16,
b = 0 bis 4,und
b) mindestens einer Dicarbonsäure der allgemeinen Formel (II)
HOOC-(CH₂)_{c}-COOH (II)
mit
c = 2 bis 8 und
c) Glykolsäure und/oder Milchsäure
sind.

2. Verwendung gemäß Anspruch 1, **dadurch gekennzeichnet, dass** als Polyalkylenglykole der allgemeinen Formel (I) Verbindungen mitverwendet werden, in denen a) einen Wert zwischen 8 bis 12 aufweist.

3. Verwendung gemäß Anspruch 1 und 2, daurch **gekennzeichnet**, dass als Dicarbonsäuren Butandisäure, Pentandisäure, Nonandisäure, Decandisäure und vorzugsweise Hexandisäure, Heptandisäure, Octandisäure mitverwendet werden.

4. Verwendung gemäß einem oder mehreren der Ansprüche 1 bis 3, daurch **gekennzeichnet**, dass das Verhältnis der Komponenten a) : b) : c) im Bereich von 1 : (0,85 bis 0,5) : (0,1 bis 0,45) liegt.

5. Verwendung gemäß einem oder mehreren der Ansprüche 1 bis 3, daurch **gekennzeichnet**, dass das Verhältnis der Komponenten a) : b) : c) im Bereich von 1 : (0,75 bis 0,6) : 0,20 bis 0,35) liegt.

6. Verwendung gemäß einem oder mehreren der Ansprüche 1 bis 3, daurch **gekennzeichnet**, dass das Verhältnis der Komponenten a) : b) : c) im Bereich von 1 : (0,7 bis 0,65) : (0,25 bis 0,30) liegt.

7. Verwendung gemäß einem oder mehreren der Ansprüche 1 bis 6, **dadurch gekennzeichnet, dass** die Kondensationsprodukte zusätzlich eines oder mehrere Additive ausgesucht aus der Gruppe der Korrosionsschutzmittel, Stabilisatoren, Antioxidantien, Netzmittel enthalten.

## Claims

1. Use of polyesters formed from at least one polyalkylene glycol and at least one dicarboxylic acid as lubricants and release agents for rubber mouldings, especially elbow hoses, **characterized in that** the polyesters are condensation products, liquid at room temperature, of
a) at least one polyalkylene glycol of the general formula (I)
HO- (CH₂-CH₂-O)ₐ-(CH₂-CH(CH₃)-O)_{b}H (I)
where
a = 4 to 16
b = 0 to 4, and
b) at least one dicarboxylic acid of the general formula (II)
HOOC- (CH₂)_{c}-COOH (II)
where
c = 2 to 8 and
c) glycolic acid and/or lactic acid.

2. Use according to Claim 1, **characterized in that** polyalkylene glycols of the general formula (I) used include compounds in which a) has a value of between 8 to 12.

3. Use according to Claim 1 and 2, **characterized in that** dicarboxylic acids used include butanedioic acid, pentanedioic acid, nonanedioic acid, decanedioic acid and, preferably, hexanedioic acid, heptanedioic acid, octanedioic acid.

4. Use according to one or more of Claims 1 to 3, **characterized in that** the ratio of components a):b):c) is situated in the range of 1:(0.85 to 0.5):(0.1 to 0.45).

5. Use according to one or more of Claims 1 to 3, **characterized in that** the ratio of components a):b):c) is situated in the range of 1:(0.75 to 0.6):(0.20 to 0.35).

6. Use according to one or more of Claims 1 to 3, **characterized in that** the ratio of components a):b):c) is situated in the range of 1:(0.7 to 0.65):(0.25 to 0.30).

7. Use according to one or more of Claims 1 to 6, **characterized in that** the condensation products further comprise one or more additives selected from the group consisting of corrosion inhibitors, stabilizers, antioxidants and wetting agents.

## Revendications

1. Utilisation de polyesters constitués d'au moins un polyalkylèneglycol et d'au moins un acide dicarboxylique comme agent de lubrification et de démoulage pour des objets moulés en caoutchouc, en particulier des manchons souples cintrés, **caractérisée en ce que** les polyesters sont des produits de condensation, liquides à température ambiante, constitués de:
a) au moins un polyalkylèneglycol de formule générale (I)
HO-(CH₂-CH₂-O)ₐ-(CH₂-CH(CH₃)-O)_{b}-H (I)
dans laquelle
a = 4 à 16 et
b = 0 à 4, et
b) au moins un acide dicarboxylique de formule générale (II)
HOOC- (CH₂)_{c}-COOH (II)
dans laquelle
c = 2 à 8 et
c) d'acide glycolique et/ou d'acide lactique.

2. Utilisation selon la revendication 1, **caractérisée en ce que** comme polyalkylèneglycols de formule générale (I), on utilise conjointement des composés dans lesquels a) a une valeur comprise entre 8 et 12.

3. Utilisation selon les revendications 1 et 2, **caractérisée en ce que** comme acides dicarboxyliques, on utilise conjointement l'acide butane dicarboxylique, l'acide pentane dicarboxylique, l'acide nonane dicarboxylique, l'acide décane dicarboxylique et de préférence l'acide hexane dicarboxylique, l'acide heptane dicarboxylique et l'acide octane dicarboxylique.

4. Utilisation selon l'une ou plusieurs des revendications 1 à 3, **caractérisée en ce que** la proportion des composants a) : b) : c) est comprise dans la plage de 1 : (0,85 à 0,5) : (0,1 à 0,45).

5. Utilisation selon l'une ou plusieurs des revendications 1 à 3, **caractérisée en ce que** la proportion des composants a) : b) : c) est comprise dans la plage de 1 : (0,75 à 0,6) : (0,20 à 0,35).

6. Utilisation selon l'une ou plusieurs des revendications 1 à 3, **caractérisée en ce que** la proportion des composants a) : b) : c) est comprise dans la plage de 1 : (0,7 à 0,65) : (0,25 à 0,30).

7. Utilisation selon l'une ou plusieurs des revendications 1 à 6, **caractérisée en ce que** les produits de condensation contiennent en outre un ou plusieurs additifs sélectionnés dans le groupe des agents de protection contre la corrosion, des agents de stabilisation, des antioxydants et des agents de mouillage.
